# EUROPEAN PATENT SPECIFICATION

(11) **EP 3 758 861 B1**
(45) Date of publication and mention of the grant of the patent: **23.03.2022**
(21) Application number: 19709569.8
(22) Date of filing: 18.02.2019
(51) Int. Cl.: B08B 3/02, B05B 15/65

(54) **HIGH-PRESSURE WASHERS ACCESSORY**
HOCHDRUCKREINIGERZUBEHÖR
ACCESSOIRE DE LAVEURS HAUTE PRESSION

(30) Priority: 28.02.2018 IT 201800003147
(43) Date of publication of application: 06.01.2021
(73) Proprietor: Annovi Reverberi S.p.A., 41122 Modena (IT)
(72) Inventor: CASALGRANDI, Alessandro, 41125 Modena (IT)
(74) Representative: Corradini, Corrado
(86) International application number: PCT/IB2019/051286
(87) International publication number: WO 2019/166911

(56) References cited:
- CN-U- 204 672 602
- DE-A1-102005 042 500
- DE-A1-102006 021 598
- US-A1- 2011 100 403
- US-A1- 2015 000 705

## Description

### Technical field

The present invention in general relates to the field of high-pressure washers and more specifically, to a head for high-pressure washers comprising two dispensing nozzles and an accessory adapted to be connected to high-pressure washers to increase the field of application.

### State of the art

As is known, a high-pressure washer is a device adapted to create a high-pressure water jet by means of which it is possible to remove dirt and/or encrustations from multiple solid surfaces, for example, floors, walls, windows, automobile chassis and much more.

The high-pressure washer essentially consists of a high-pressure pump that, activated by a motor, for example an electric motor, pumps water from a tank and sends it at high pressure towards a dispensing gun.

The dispensing gun comprises an inlet duct adapted to be hydraulically connected with the pump delivery, for example by means of a flexible hose, an outlet duct or a barrel, through which the water jet is dispensed externally, and a valve apparatus that, activated by a lever or other manual control, is selectively adapted to open and close the hydraulic communication between the inlet duct and the outlet duct.

An accessory typically is applied at the end of the outlet duct of the dispensing gun, such as for example, a lance or a dispensing nozzle, which is adapted to stabilize and adjust the shape of the water jet that is projected externally and towards the surface to be treated.

According to the specific operations to be performed with the high-pressure washer, the accessories may be substituted by selecting them from a wide range. For example, there are conical jet nozzles adapted to create a conical-shaped water jet, nozzles with fan-shaped jet adapted to create a water blade that develops like a fan, and rotating jet nozzles adapted to create a water jet that develops in a spiral about the dispensing direction.

According to the models, all these jets may also have a fixed or adjustable geometry, for example with regard to the degree of opening of the conical- or fan-shaped jet.

However, a drawback connected with all these high-pressure washer nozzles lies in the fact that the portion of surface that is directly hit by the water jet generated thereby normally is rather limited, whereby the cleaning operations normally require several passes and relatively increased time to be completed.

Indeed, the only method for increasing the sizes of the jet on the surface currently is the one of increasing the opening angle of the jet or of moving the nozzle away from the surface to be treated, but both these possibilities entail a reduction of the power of the jet in the contact point and therefore a reduction of the cleaning efficiency.

Another drawback of the known accessories consists in the fact that it is possible to perform one operation alone at a time with each type of nozzle, for example a wash with a rotating nozzle to remove dirt stuck on the surface, followed by a rinsing step of the surface by means of a fan-shaped jet nozzle. This results in it not currently being possible to obtain a synergistic effect from two different types of jet and the dispensing nozzle may require changing several times to effectively complete a wash, thus increasing the working time.

The document US-A1-2011/0100403 discloses a head for high-pressure washers comprising two dispensing nozzles and an accessory, in accordance with the preamble of claim 1.

### Description of the invention

In light of that disclosed above, it is one object of the present invention to resolve, or at least effectively mitigate, the mentioned drawbacks of the known technique within the scope of a simple, rational and relatively affordable solution.

These and other objects are reached thanks to the characteristics of the invention as set forth in independent claim 1. The dependent claims outline preferred and/or particularly advantageous aspects of the invention.

The present invention makes use of an accessory for a high-pressure washer comprising:
- a body defining an inner chamber,
- an inlet mouth for a pressurized fluid communicating with the inner chamber and adapted to be placed in hydraulic connection with an outlet mouth of a dispensing gun, and
- two outlet mouths of the pressurized fluid communicating with the inner chamber and individually adapted to be placed in hydraulic connection with an inlet mouth of a respective dispensing nozzle.

Thanks to the accessory outlined above, and equipping the dispensing gun of the high-pressure washer with at least two dispensing nozzles, which may be efficiently used simultaneously, thus obtaining two high-pressure water jets that operate in synergy and that substantially may double the portion of the surface to be treated that is directly high by the pressurized water.

To this end, an aspect of the invention provides for each of these nozzles to be selected from the group consisting of: a conical fixed jet nozzle, a conical adjustable jet nozzle, a fixed nozzle with fan-shaped jet, an adjustable nozzle with fan-shaped jet, a rotating jet nozzle.

In this manner, it advantageously is possible to obtain jets of several shapes according to the specific needs.

In particular, a significant aspect of the invention is the fact that the nozzles connected to one of the outlet mouths of the accessory may be different (intended as model and/or type) with respect to the nozzle that is connected to the other outlet mouth, for example a fan-shaped jet nozzle with fixed angle and a rotating jet nozzle.

Thanks to this solution, it is possible to obtain a synergistic effect of the two jets having different shape and characteristics which, when used simultaneously, may increase the overall cleaning efficiency of the high-pressure washer and reduce the number of nozzle changes for completing the activities.

For example, thanks to the accessory proposed, it is possible to execute with a single pass both a step of removing the dirt with rotating jet nozzle and a rinsing step with fan-shaped jet nozzle.

According to another aspect of the invention, an engagement device may be associated with the inlet mouth of the accessory, which is adapted to provide a separable hydraulic connection between said inlet mouth and the outlet mouth of the dispensing gun.

Thanks to this solution, the accessory may easily be separated from the dispensing gun of the high-pressure washer, which may therefore also be used in traditional manner with a single dispensing nozzle.

In particular, the aforesaid engagement device may comprise a first portion of a quick coupling and quick-release hydraulic connector, which portion is adapted to become attached with a second portion of said hydraulic connector which is associated with the outlet mouth of the dispensing gun.

In this manner, the attaching and releasing operations of the accessory with respect to the dispensing gun may be performed quickly and in simple and safe manner.

For example, the first portion of the aforesaid hydraulic connector, i.e. the one that is associated with the inlet mouth of the accessory, may be a male portion.

In this manner, the female portion of the hydraulic connector remains associated with the dispensing gun, which portion therefore not only may be used with the accessory herein proposed, but also directly with most of the other accessories currently available.

A further aspect of the invention provides for the engagement device of the accessory to be adapted to connect the inlet mouth to the outlet mouth of the dispensing gun in at least two different angular positions, for example rotated by 90° with respect to each other.

Thanks to this solution, it advantageously is possible to orient the two dispensing nozzles in different manner, for example vertically or horizontally, according to the specific desired uses.

According to the invention, a respective engagement device is associated with each outlet mouth of the accessory, which engagement device is adapted to provide a separable hydraulic connection between said outlet mouth and the inlet mouth of the respective dispensing nozzle.

Thanks to this solution, the accessory may easily be separated from the dispensing nozzles, which may therefore be replaced as liked on the basis of the specific usage needs.

In accordance with the invention, aforesaid engagement device comprises a first portion of a quick coupling and quick-release hydraulic connector, which portion is adapted to become attached with a second portion of said hydraulic connector which is associated with the inlet mouth of the dispensing nozzles. In this manner, the attaching and releasing operations of the dispensing nozzles with respect to the accessory may be performed quickly and in simple and safe manner.

For example, the first portion of the aforesaid hydraulic connector may be a female portion.

In this manner, the accessory may be equipped and used with most of the dispensing nozzles currently available.

According to a further aspect of the invention, the accessory may comprise a joint adapted to vary the inclination of an axis of the inlet mouth, with respect to the axes of the outlet mouths, thus allowing for example, an angular variation of 20°.

Thanks to this solution, it advantageously is possible to vary the orientation of the outlet mouths of the accessory, and therefore of the dispensing nozzles associable therewith, with respect to the dispensing gun.

The invention provides for the outlet mouths of the accessory to have axes which are coplanar and mutually divergent in the dispensing direction.

In this manner, it is ensured for the water jets leaving the dispensing nozzles connectable to the accessory not overlap or interfere with one another before reaching the surface to be treated.

In accordance with the invention, the mutual inclination angle between the axes of the outlet mouths is comprised between 5° and 15°, preferably substantially equal to 10° (intended as sexagesimal degrees).

The present invention thus makes available a head for high-pressure washers comprising two dispensing nozzles and an accessory as outlined above, and also, in a preferred embodiment, a dispensing assembly for high-pressure washers.

### Brief description of the drawings

Further features and advantages of the invention will be more apparent after reading the following description provided by way of a non-limiting example, with the aid of the accompanying drawings.
Figure 1 is a side view of a high-pressure washer dispensing assembly comprising a head according to an embodiment of the present invention.
Figure 2 is a top view of the dispensing assembly of figure 1.
Figure 3 is section III-III of figure 1, shown on enlarged scale.
Figure 4 is section IV-IV of figure 3.
Figure 5 is an axonometric view of the head alone belonging to the dispensing assembly of figure 1.
Figures 6 and 7 are the axonometric views of two heads conforming with a second and a third embodiment, respectively, of the present invention.
Figure 8 is the section corresponding to the one of figure 3, but relative to the head of figure 6.

### Detailed description

The accompanying drawings disclose a dispensing assembly 100 for a high-pressure washer, i.e. the assembly of members adapted to allow the dispensing of a high-pressure water jet coming from the high-pressure washer.

The high-pressure washer, which is not illustrated because it is in itself known, generally comprises a high-pressure pump, for example a piston pump, and a motor, for example an electric motor, which is adapted to operate the pump so as to allow the latter to pump water from a tank to the dispensing assembly 100.

The pump, the motor and the tank may be enclosed in a protective casing, for example made of plastic material, which may be mounted on a trolley to allow the high-pressure washer to be easily moved from one place to another.

The dispensing assembly 100 comprises a dispensing gun 105 which, within the scope of the present disclosure, is to be generically intended as any device comprising an inlet duct 110 for the pressurized water coming from the pump, an outlet duct 115 for the water to the outside, and a valve apparatus adapted to selectively open and close the hydraulic communication between said inlet duct 110 and said outlet duct 115.

The inlet duct 110 is adapted to be hydraulically connected with the pump delivery, for example but not necessarily, through a flexible hose.

The valve apparatus may comprise any type of valve capable of being moved between an open position in which it allows a hydraulic communication between the inlet duct 110 and the outlet duct 115, and a closed position in which it interrupts such communication.

The movements of the valve from the closed position to the open position may be manually controlled, for example by manually operating a control lever 120 that is associated with the body of the dispensing gun 105.

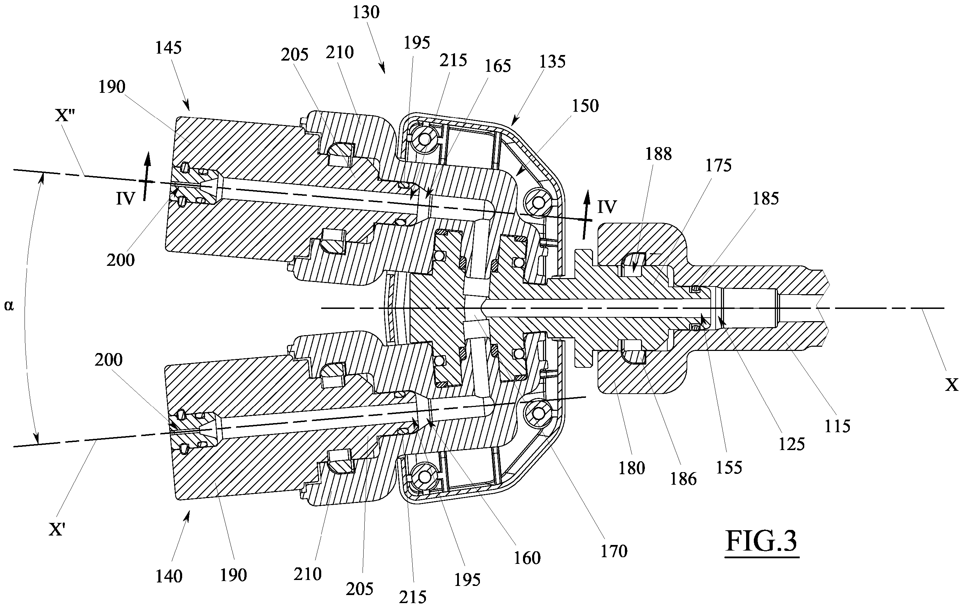

The outlet duct 115 may have the shape of a more or less long barrel, at the free end of which there is placed an outlet mouth 125 for the pressurized water (see fig. 3).

A head, indicated as a whole with 130, is removably associated with the outlet duct 115, which head is prepared to modify and/or adjust the water jet outlet from the outlet mouth 125.

In particular, the head 130 comprises an accessory 135, which mainly is adapted to define the flow of water into two separate jets, and a pair of dispensing nozzles, indicated with 140 and 145, respectively, each of which is adapted to be coupled with the accessory 135 so as to modify the shape of a respective water jet.

The accessory 135 essentially comprises an internally hollow body 150, which is provided with an inlet mouth 155 adapted to be placed in communication with the outlet mouth 125 of the dispensing gun 105, and with two outlet mouths 160 and 165.

The body 150 may be made in several parts that are assembled with one another, each of which may be obtained in plastic material, for example by injection moulding.

The body 150 may also at least be partially received in a covering shell, it also potentially of plastic material, which may mainly serve appearance and/or protective functions.

The inlet mouth 155 and the two outlet mouths 160 and 165 are in hydraulic communication with a single inner chamber 170 which is defined inside the body 150 so that the pressurized water entering from the inlet mouth 155 is divided and distributed to both the outlet mouths 160 and 165 to obtain the two separate jets.

In greater detail, each outlet mouth 160 and 165 has a respective central axis X' and X" which substantially is perpendicular to the lying plane of the respective outlet mouth and generally coinciding with the direction of the outgoing water jet.

In accordance with the invention, the central axes X' and X" of the outlet mouths 160 and 165 are substantially coplanar to each other and possibly mutually diverging from each other in the dispensing direction so that the two water jets tend to at least slightly move away from each other starting from the outlet mouths 160 and 165 towards the outside.

In accordance with the invention, the mutual inclination angle α between the central axes X' and X" of the outlet mouths 160 and 165 is comprised between 5° and 15°, preferably equal to 10°.

The inlet mouth 155 preferably is positioned on the opposite side with respect to the outlet mouths 160 and 165 and also has a central axis X, which substantially is perpendicular to a lying plane of the inlet mouth 155 and generally coinciding with the direction of the incoming pressurized water. Preferably, the central axis X of the inlet mouth 155 lies coplanar to the central axes X' and X" of the outlet mouths 160 and 165 and may possibly extend along the bisecting line of the angle α formed by the latter so as not to define any preferential direction for the water which is thus divided equally into the two jets.

In certain embodiments, the inlet mouth 155 may be defined in a separate body and may be placed in communication with the inner chamber 170 through a hydraulic joint which allows varying the relative inclination between the central axis X of the inlet mouth 155 and the central axes X' and X" of the outlet mouths 160 and 165.

In particular, such hydraulic joint may allow inclining the central axis X of the inlet mouth 155 along a plane containing the same central axis X and orthogonal to the lying plane of the central axes X' and X" of the outlet mouths 160 and 165.

In accordance with the invention, engagement device is associated with the inlet mouth 155, which is adapted to provide a separable (i.e. that can be dismantled) hydraulic connection between said inlet mouth 155 and the outlet mouth 125 of the dispensing gun 105.

In accordance with the invention, this engagement device comprises a first portion 175, preferably a "male" portion, of a quick-coupling and a quick-release connector, a second portion 180 of which, preferably a "female" portion, is associated with the outlet mouth 125 of the dispensing gun 105.

In other words, the inlet mouth 155 of the accessory 135 may be defined at the end of the first portion 175 of the connector, which may be made in a single piece with the body 150 or in any case be rigidly connected to the other parts of the latter, while the outlet mouth 125 of the dispensing gun 105 may be defined on the bottom of the cavity of the second portion 180 of the connector, which may be made in a single piece or be rigidly connected with the outlet duct 115.

In this manner, when the first portion 175 of the connector is inserted and locked in the cavity of the second portion 180, the outlet mouth 125 of the dispensing gun 105 is in hydraulic communication with the inlet mouth 155 of the accessory 135.

Such hydraulic connection may be airtight with respect to the surrounding environment by means of a gasket 185, for example a sealing ring, which is coaxially threaded and locked on the first portion 175 of the connector so as to be radially compressed between an outer surface of said first portion 175 and a corresponding inner surface of the cavity of the second portion 180. The locking of the first portion 175 of the connector with respect to the second portion 180 may be obtained by means of an automatic snap-fit system, which automatically begins operating when the first portion 175 reaches a pre-set axial locking position inside the cavity of the second portion 180.

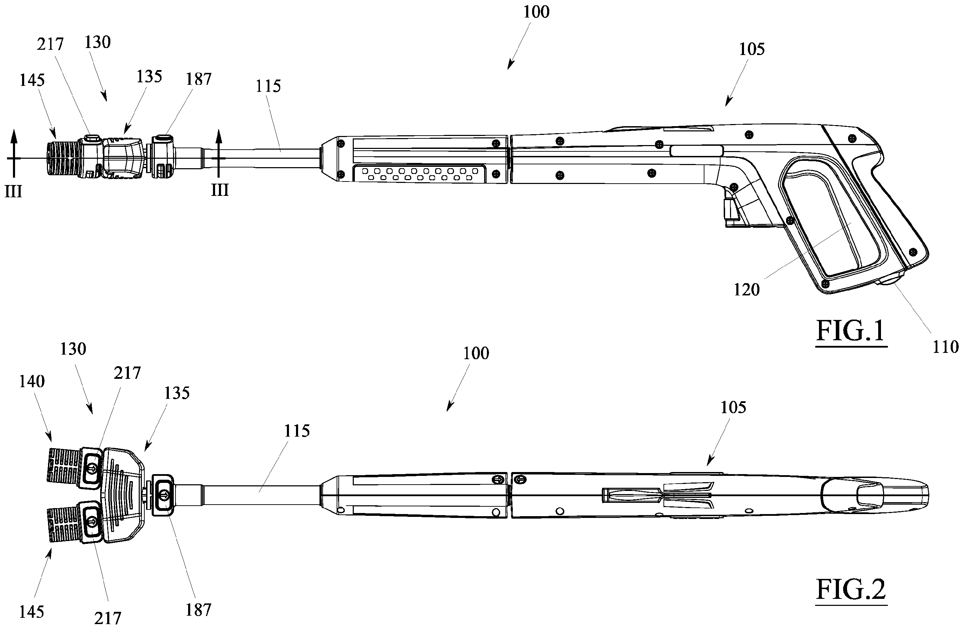

For example, such locking system may comprise a movable pawl 186 which is associated with the second portion 180 so as to move in transverse direction with respect to the insertion direction of the first portion 175 (in orthogonal direction with respect to the section plane of figure 3), a spring (not shown) adapted to push said pawl 186 towards an extracted position, in which it at least partially protrudes inside the cavity of the second portion 180, and a release button 187 placed on the outer side of the second portion 180 (see figures 1 and 2) adapted to be manually pressed to move the pawl 186, in order to counter the action of the spring, towards a retracted position in which it does not protrude inside the cavity of the second portion 180.

The first portion 175 of the connector may simultaneously comprise a tapered end stretch which outer surface is adapted to serve as cam profile to transform the axial insertion movement of the first portion 175 into the second portion 180, into a transverse movement of the pawl 186 towards the retracted position, and an annular cavity 188 adapted to face and be transversely aligned with the pawl 186 when the first portion 175 reaches the locking position.

In this manner, when the locking position is reached, the pawl 186, pushed by the spring, snappingly returns to its extracted position, thus engaging in the annular cavity 188 and preventing the first portion175 from being removed with respect to the second portion 180.

In order to proceed with the release, it is then sufficient to manually push the release button 187, thus bringing the pawl 186 into retracted position, and then to remove the first portion 175.

In certain embodiments, the first portion 175 and the second portion 180 of the hydraulic connector may be shaped so that, or be provided with further constraining elements such that, the mutual coupling and locking thereof may only occur for a pre-set mutual angular position about the central axis X of the inlet mouth 155.

However, it in general is preferable for the hydraulic connector to be shaped so that the aforesaid coupling and attachment may occur in different multiple angular positions of the first portion 175 with respect to the second portion 180 around the central axis X, for example in at least two angular positions separated by a rotation angle of about 90°.

Moving on now to the dispensing nozzles 140 and 145, each of these nozzles in turn comprises an internally hollow body 190 which is provided with an inlet mouth 195 and an outlet mouth (or orifice) 200 and therein defining a duct adapted to put said inlet mouth 195 into communication with said outlet mouth 200.

The body 190 may be made of plastic, for example by means of an injection moulding process.

The inlet mouth 195 of the dispensing nozzle 140 is adapted to be put into communication with the outlet mouth 160 of the accessory 135, while the inlet mouth 195 of the dispensing nozzle 145 is adapted to be put into communication with the outlet mouth 165.

The inlet mouth 195 and the outlet mouth 200 of each dispensing nozzle 140 and 145 generally are aligned along a central axis of the dispensing nozzle, which may coincide with the central axis X' or X" of the respective outlet mouth 160 or 165 of the accessory 135 and may coincide with the emission direction of the water jet.

According to the shape and/or sizes of the duct and/or of the outlet mouth 200 and/or based on possible further components or additional devices placed inside the body 190 along the path of the water, each dispensing nozzle 140 and 145 generally is adapted to shape the water jet and/or impart a pre-set movement thereon.

For example, the dispensing nozzle 140 may be a fan-shaped jet nozzle, i.e. a nozzle configured so as to generate an outgoing water blade that extends like a fan, widening from the outlet mouth 200 outwards, for example with an angle to the vertex of about 20°.

The dispensing nozzle 140 may also be a fixed nozzle, i.e. a nozzle which inner geometry may not be modified and therefore which is adapted to generate a jet always substantially having the same shape, water pressure being equal, in the case at hand always a fan-shaped jet with angle to the vertex of about 20°.

However, it is not excluded in other embodiments for the dispensing nozzle 140 to possibly be an adjustable nozzle, for example a nozzle with fan-shaped jet but capable of being reconfigured to vary the angle to the vertex of the outgoing water blade generated.

In any case, it is in general provided for the dispensing nozzle 140 to be replaced by any other type of known dispensing nozzle, among which for example, a conical fixed jet nozzle, a conical adjustable jet nozzle, or a rotating jet nozzle.

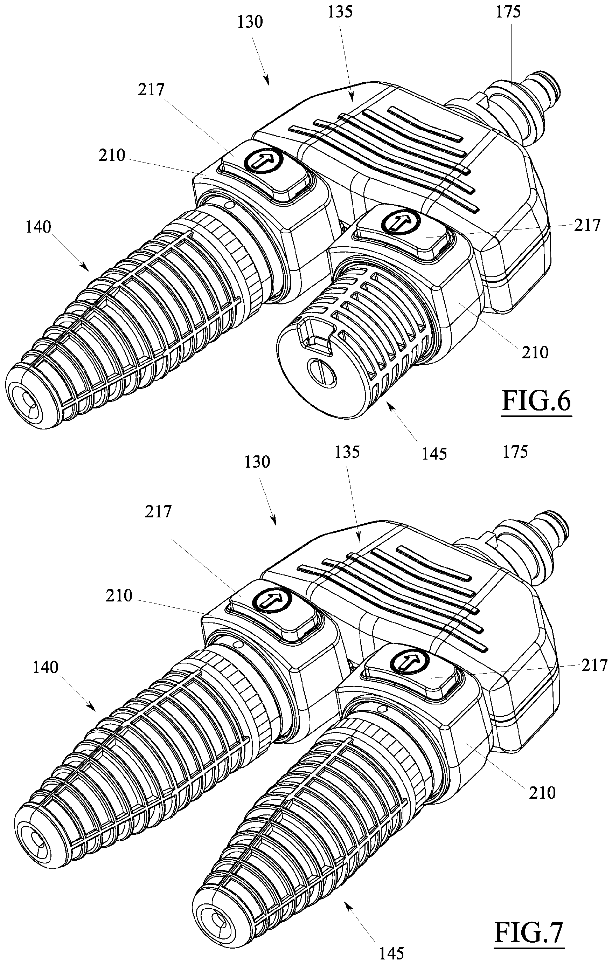

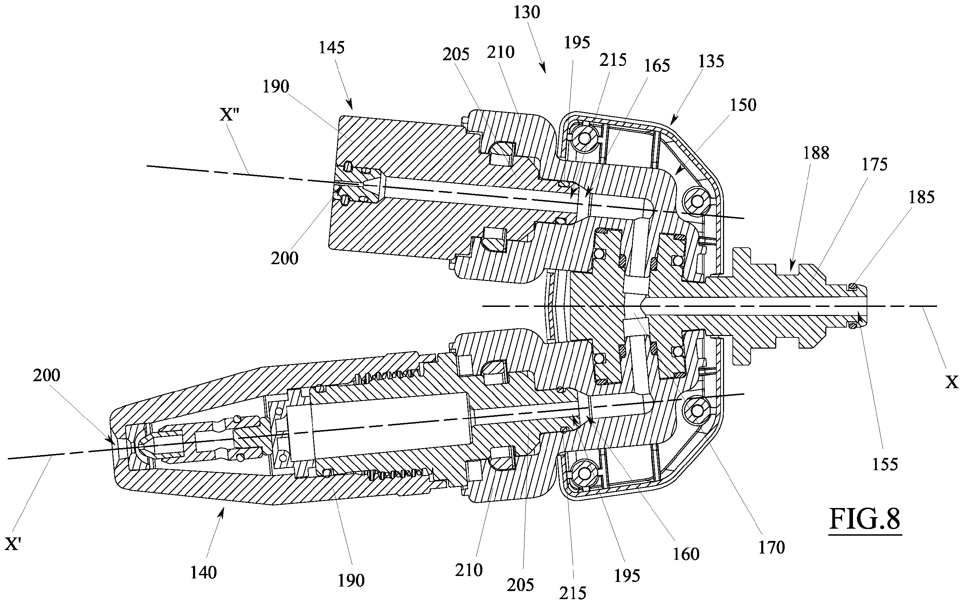

For example, in the embodiment shown in figures 6 and 8, the dispensing nozzle 140 is a rotating jet nozzle, i.e. a nozzle configured to impart a spiral movement about the direction of emission to the outgoing jet.

The rotating nozzles are widely known in the field, hence a detailed description of the construction characteristics thereof is omitted.

The other dispensing nozzle 145 may be of the same type as the dispensing nozzle 140 or of different type.

For example, both the dispensing nozzles 140 and 145 in the embodiment of figure 6 are fixed nozzles with fan-shaped jet; the dispensing nozzle 140 in the embodiment of figure 6 is a rotating nozzle while the dispensing nozzle 145 is a fixed nozzle with fan-shaped jet; and both the dispensing nozzles 140 and 145 in the embodiment of figure 8 are rotating nozzles.

In general, also the dispensing nozzle 145 may be any type of dispensing nozzle, for example a conical fixed jet nozzle, a conical adjustable jet nozzle, a fixed nozzle with fan-shaped jet or an adjustable nozzle with fan-shaped jet.

Irrespective of the type of dispensing nozzle, an engagement device preferably is associated with each outlet mouth 160 and 165 of the accessory 135 which is adapted to provide a separable hydraulic connection (i.e. that can be dismantled) between said outlet mouth 160 or 165 195 and the inlet mouth 195 of the respective dispensing nozzle 140 or 145.

For example, this engagement device may comprise or consist of a first portion 210, preferably a "female" portion, of a quick-coupling and a quick-release connector, the second portion 205 of which, preferably a "male" portion, is associated with the inlet mouth 195 of the corresponding dispensing nozzle 140 or 145.

In other words, each outlet mouth 160 and 165 of the accessory 135 may be defined on the bottom of a cavity of the first portion 210 of the respective connector, which may be made in a single piece or be rigidly connected with the body 150 of the accessory 135, while the inlet mouth 195 of the corresponding dispensing nozzle 140 or 145 may be defined at the end by the second portion 205 of the connector, which may be made in a single piece with the body 190 or in any case rigidly connected to the other components of the latter.

In this manner, when the second portion 205 of the connector is inserted and locked in the cavity of the first portion 210, each outlet mouth 160 and 165 of the accessory 135 is in hydraulic communication with the inlet mouth 195 of the respective dispensing nozzle 140 or 145.

Such hydraulic connection may be airtight with respect to the surrounding environment by means of a gasket 215, for example a sealing ring, which is coaxially threaded and locked on the second portion 205 of each connector, so as to be radially compressed between an outer surface of said second portion 205 and a corresponding inner surface of the cavity of the first portion 210.

The locking of the second portion 205 of each connector with respect to the first portion 210 may be obtained by means of an automatic snap-fit system, which automatically begins operating when the second portion 205 reaches a pre-set axial locking position inside the cavity of the first portion 210.

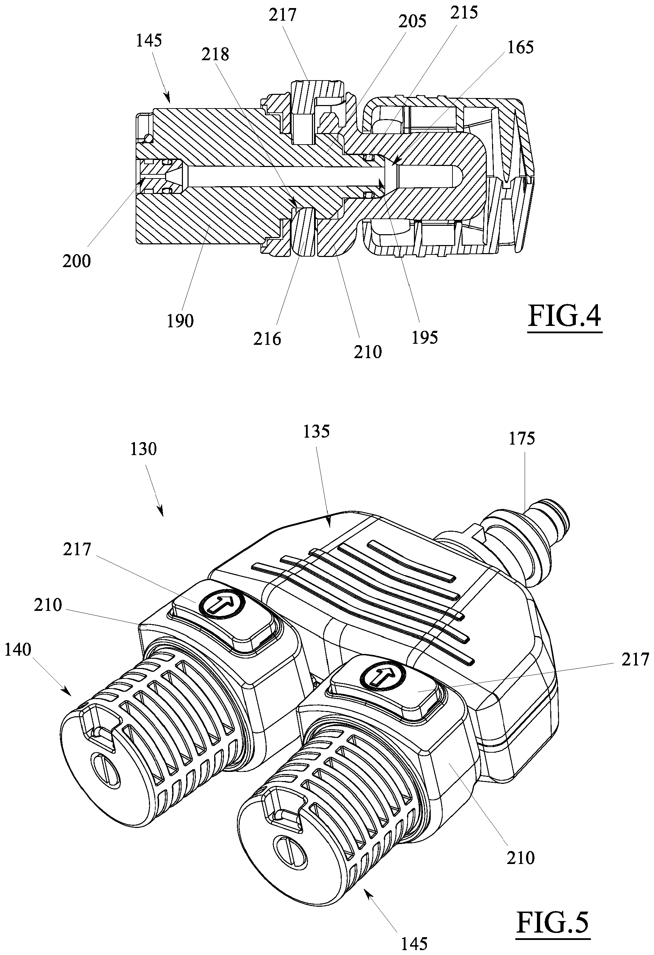

For example, such locking system may comprise a movable pawl 216 (see fig. 4) which is associated with the first portion 210 so as to move in transverse direction with respect to the insertion direction of the second portion 205, a spring (not shown) adapted to push said pawl towards an extracted position (shown in figure 4), wherein it at least partially protrudes inside the cavity of the first portion 210, and a release button 217 placed on the outer side of the second portion 210 and adapted to be manually pressed to move the pawl 216, in order to counter the action of the spring, towards a retracted position in which it does not protrude inside the cavity of the first portion 210.

The second portion 205 of each connector may simultaneously comprise a tapered end stretch which outer surface is adapted to serve as cam profile to transform the axial insertion movement of the second portion 205 into the first portion 210, into a transverse movement of the pawl towards the retracted position, and an annular cavity 218 adapted to face and be transversely aligned with the pawl 216 when the second portion 205 reaches the locking position.

In this manner, when the locking position is reached, the pawl 216, pushed by the spring, snappingly returns to its extracted position, thus engaging in the annular cavity 218 and preventing the second portion 205 from being removed with respect to the first portion 210.

In order to release each dispensing nozzle 140 and 145, it is then sufficient to manually push the respective release button 217, thus bringing the pawl 216 into retracted position, and then to remove the second portion 205 of the connector.

In practice, each of the hydraulic connectors which allow connecting the dispensing nozzles 140 and 145 to the accessory 135 may be identical, or in any case functionally similar, to the hydraulic connector which allows connecting the accessory 135 to the dispensing gun 105.

Also in this case, the first portion 210 and the second portion 205 of the hydraulic connectors of the dispensing nozzles 140 and 145 may be shaped so that, or be provided with further constraining elements such that, the mutual coupling and locking thereof may only occur for a pre-set mutual angular position about the central axis X' or X" of the respective outlet mouth 160 or 165.

However, it in general is also possible for the hydraulic connector to be shaped so that the aforesaid coupling and attachment may occur in different multiple angular positions of the first portion 210 with respect to the second portion 205 around the respective central axis X' or X".

Obviously, an expert in the field may make several technical-applicative modifications to that above, without departing from the scope of the invention as hereinbelow claimed.

## Claims

1. A head (130) for high-pressure washers comprising two dispensing nozzles (140, 145) and an accessory (135), the accessory (135) comprising:
- a body (150) defining an inner chamber (170),
- an inlet mouth (155) for a pressurized fluid communicating with the inner chamber (170) and adapted to be placed in hydraulic connection with an outlet mouth (125) of a dispensing gun (105), and
- two outlet mouths (160, 165) of the pressurized fluid communicating with the inner chamber (170) and individually adapted to be placed in a hydraulic connection with an inlet mouth (195) of a respective one of the dispensing nozzles (140, 145),
wherein each outlet mouth (160, 165) of the body (150) is associated to a respective engagement device, which provides a separable hydraulic connection between said outlet mouth (160, 165) of the body (150) and the inlet mouth (195) of the respective dispensing nozzle (140, 145), wherein the outlet mouths (160, 165) have axes (X', X") coplanar and mutually divergent in the dispensing direction,
**characterized in that**
each engagement device comprises a quick coupling and quick-release hydraulic connector having a first portion (210), which is associated to the outlet mouth (160, 165) of the body (150), and a second portion (205), which is associated to the inlet mouth (195) of the dispensing nozzle (140, 145) and is adapted to become attached with the first portion (210),
wherein the mutual inclination angle (α) of the axes (X', X") of the outlet mouths (160, 165) is of between 5°and 15 °.

2. A head (130) according to claim 1, wherein an engagement device is associated with the inlet mouth (155), which is adapted to provide a separable hydraulic connection between said inlet mouth (155) and the outlet mouth (125) of the dispensing gun (105).

3. A head (130) according to claim 2, wherein said engagement device comprises a first portion (175) of a quick coupling and quick-release hydraulic connector, which portion is adapted to become attached with a second portion (180) of said hydraulic connector which is associated with the mouth outlet (125) of the dispensing gun (105).

4. A head (130) according to claim 3, wherein said first portion (175) of the hydraulic connector is a male portion.

5. A head (130) according to any one of claims 2 to 4, wherein said engagement device is adapted to connect the inlet mouth (155) to the outlet mouth (125) of the dispensing gun (105) in at least two different angular positions.

6. A head (130) according to any of the preceding claims, wherein said first portion (210) of the hydraulic connector is a female portion having a cavity and said second portion (205) of the hydraulic connector is a male portion adapted to be inserted and locked in the cavity of the first portion (210),
the outlet mouth (160, 165) of the body (150) being defined on the bottom of the cavity of the first portion (210),
the inlet mouth (195) of the corresponding dispensing nozzle (140, 145) being defined at the end of the second portion (205),
each hydraulic connector being provided with an automatic snap-fit system being provided for locking the second portion (205) with respect to the first portion (210), when the second portion (205) reaches a pre-set axial locking position inside the cavity of the first portion (210).

7. A head (130) according to claim 6, wherein the automatic snap-fit system comprises a movable pawl (216) which is associated with the first portion (210) so as to move in transverse direction with respect to the insertion direction of the second portion (205), a spring adapted to push said pawl (216) towards an extracted position, wherein it at least partially protrudes inside the cavity of the first portion (210), and a release button (217) placed on the outer side of the second portion (210) and adapted to be manually pressed to move the pawl (216), in order to counter the action of the spring, towards a retracted position in which it does not protrude inside the cavity of the first portion (210),
the second portion (205) of the hydraulic connector comprising a tapered end stretch which outer surface adapted to serve as cam profile to transform the axial insertion movement of the second portion (205) into the first portion (210), into a transverse movement of the pawl (216) towards the retracted position, and an annular cavity (218) adapted to face and be transversely aligned with the pawl (216) when the second portion (205) reaches a locking position.

8. A head (130) according to any one of the preceding claims, wherein each of said dispensing nozzles (140, 145) is a dispensing nozzle selected from the group consisting of: a conical fixed jet nozzle, a conical adjustable jet nozzle, a fixed nozzle with fan-shaped jet, an adjustable nozzle with fan-shaped jet, a rotating jet nozzle.

9. A head (130) according to any of the preceding claims, wherein one (140) of the dispensing nozzles is a rotating jet nozzle and the other one (145) of the dispensing nozzles is a fixed nozzle with a fan-shaped jet.

10. A head (130) according to any one of the preceding claims, comprising a joint adapted to vary the inclination of an axis (X) of the inlet mouth (155) relative to the axes (X', X") of the outlet mouths (160, 165).

11. A dispensing assembly (100) for high-pressure washers, comprising a dispensing gun (105) and a head according to any of the preceding claims.

## Patentansprüche

1. Kopf (130) für Hochdruckreiniger, umfassend zwei Ausgabedüsen (140, 145) und ein Zubehörteil (135), das Zubehörteil (135) umfassend:
- ein Gehäuse (150), das eine innere Kammer (170) definiert,
- eine Einlassmündung (155) für ein unter Druck stehendes Fluid, die mit der inneren Kammer (170) in Verbindung und angepasst ist, um mit einer Auslassmündung (125) einer Ausgabepistole (105) in hydraulische Verbindung gebracht zu werden, und
- zwei Auslassmündungen (160, 165) des unter Druck stehenden Fluids, die mit der inneren Kammer (170) in Verbindung sind und individuell angepasst sind, um mit einer Einlassmündung (195) einer jeweiligen der Ausgabedüsen (140, 145) in eine hydraulische Verbindung gebracht zu werden,
wobei jede Auslassmündung (160, 165) des Gehäuses (150) mit einer jeweiligen Eingreifvorrichtung assoziiert ist, die eine trennbare hydraulische Verbindung zwischen der Auslassmündung (160, 165) des Gehäuses (150) und der Einlassmündung (195) der jeweiligen Ausgabedüse (140, 145) bereitstellt,
wobei die Auslassmündungen (160, 165) Achsen (X', X") aufweisen, die komplanar sind und in der Ausgaberichtung gegenseitig divergieren,
**dadurch gekennzeichnet, dass**
jede Eingreifvorrichtung einen hydraulischen Schnellkupplungs- und Schnelllöseverbinder umfasst, der einen ersten Abschnitt (210), der mit der Auslassmündung (160, 165) des Gehäuses (150) assoziiert ist, und einen zweiten Abschnitt (205), der mit der Einlassmündung (195) der Ausgabedüse (140, 145) assoziiert und angepasst ist, um mit dem ersten Abschnitt (210) verbunden zu werden, aufweist,
wobei der gegenseitige Neigungswinkel (α) der Achsen (X', X") der Auslassmündungen (160, 165) zwischen 5° und 15° ist.

2. Kopf (130) nach Anspruch 1, wobei eine Eingreifvorrichtung mit der Einlassmündung (155) assoziiert ist, die angepasst ist, um eine trennbare hydraulische Verbindung zwischen der Einlassmündung (155) und der Auslassmündung (125) der Ausgabepistole (105) bereitzustellen.

3. Kopf (130) nach Anspruch 2, wobei die Eingreifvorrichtung einen ersten Abschnitt (175) eines hydraulischen Schnellkupplungs- und Schnelllöseverbinders umfasst, wobei der Abschnitt angepasst ist, um mit einem zweiten Abschnitt (180) des hydraulischen Verbinders angebracht zu werden, der mit dem Mündungsauslass (125) der Ausgabepistole (105) assoziiert ist.

4. Kopf (130) nach Anspruch 3, wobei der erste Abschnitt (175) des hydraulischen Verbinders ein Steckabschnitt ist.

5. Kopf (130) nach einem der Ansprüche 2 bis 4, wobei die Eingreifvorrichtung angepasst ist, um die Einlassmündung (155) in mindestens zwei verschiedenen Winkelpositionen mit der Auslassmündung (125) der Ausgabepistole (105) zu verbinden.

6. Kopf (130) nach einem der vorherigen Ansprüche, wobei der erste Abschnitt (210) des hydraulischen Verbinders ein Buchsenabschnitt ist, der einen Hohlraum aufweist, und der zweite Abschnitt (205) des hydraulischen Verbinders ein Steckabschnitt ist, der angepasst ist, um in den Hohlraum des ersten Abschnitts (210) eingesetzt und arretiert zu werden,
wobei die Auslassmündung (160, 165) des Gehäuses (150) an dem Boden des Hohlraums des ersten Abschnitts (210) definiert ist,
wobei die Einlassmündung (195) der entsprechenden Ausgabedüse (140, 145) an dem Ende des zweiten Abschnitts (205) definiert ist,
wobei jeder hydraulische Verbinder mit einem automatischen Rastsystem versehen ist, das bereitgestellt ist, um den zweiten Abschnitt (205) in Bezug auf den ersten Abschnitt (210) zu arretieren, wenn der zweite Abschnitt (205) eine voreingestellte axiale Arretierposition innerhalb des Hohlraums des ersten Abschnitts (210) erreicht.

7. Kopf (130) nach Anspruch 6, das automatische Rastsystem umfassend eine bewegliche Sperrklinke (216), die mit dem ersten Abschnitt (210) assoziiert ist, um sich in Querrichtung in Bezug auf die Einsetzrichtung des zweiten Abschnitts (205) zu bewegen, eine Feder, die angepasst ist, um die Sperrklinke (216) in eine herausgestellte Position zu drücken, in der sie zumindest teilweise in den Hohlraum des ersten Abschnitts (210) hervorsteht, und einen Freigabeknopf (217), der an der Außenseite des zweiten Abschnitts (210) platziert und angepasst ist, um von Hand gedrückt zu werden, um die Sperrklinke (216) gegen die Wirkung der Feder in eine zurückgezogene Position zu bewegen, in der sie nicht in den Hohlraum des ersten Abschnitts (210) hervorsteht, der zweite Abschnitt (205) des hydraulischen Verbinders umfassend ein verjüngtes Endstück, dessen Außenfläche angepasst ist, um als Nockenprofil zu dienen, um die axiale Einsetzbewegung des zweiten Abschnitts (205) in den ersten Abschnitt (210) in eine Querbewegung der Sperrklinke (216) in Richtung der zurückgezogenen Position umzuwandeln, und einen ringförmigen Hohlraum (218), der angepasst ist, um der Sperrklinke (216) zugewandt und quer damit ausgerichtet zu sein, wenn der zweite Abschnitt (205) eine Arretierposition erreicht.

8. Kopf (130) nach einem der vorherigen Ansprüche, wobei jede der Ausgabedüsen (140, 145) eine Ausgabedüse ist, die ausgewählt ist aus der Gruppe, bestehend aus: einer konischen feststehenden Strahldüse, einer konischen einstellbaren Strahldüse, einer feststehenden Düse mit fächerförmigem Strahl, einer einstellbaren Düse mit fächerförmigem Strahl, einer drehenden Strahldüse.

9. Kopf (130) nach einem der vorherigen Ansprüche, wobei eine (140) der Ausgabedüsen eine drehende Strahldüse ist und die andere (145) der Ausgabedüsen eine feststehende Düse mit einem fächerförmigen Strahl ist.

10. Kopf (130) nach einem der vorherigen Ansprüche, umfassend ein Gelenk, das angepasst ist, um die Neigung einer Achse (X) der Einlassmündung (155) in Bezug auf die Achsen (X', X") der Auslassmündungen (160, 165) zu variieren.

11. Ausgabeanordnung (100) für Hochdruckreiniger, umfassend eine Ausgabepistole (105) und einen Kopf nach einem der vorherigen Ansprüche.

## Revendications

1. Tête (130) pour nettoyeurs haute pression comprenant deux buses de distribution (140, 145) et un accessoire (135), l'accessoire (135) comprenant :
- un corps (150) définissant une chambre interne (170),
- une bouche d'entrée (155) pour un fluide sous pression communiquant avec la chambre intérieure (170) et adaptée pour être placée en connexion hydraulique avec une bouche de sortie (125) d'un pistolet de distribution (105), et
- deux bouches de sortie (160, 165) du fluide sous pression communiquant avec la chambre intérieure (170) et adaptée individuellement pour être placée en connexion hydraulique avec une bouche d'entrée (195) d'une des buses de distribution (140, 145) respective,
dans lequel chaque bouche de sortie (160, 165) du corps (150) est relié à un dispositif d'engagement respectif, qui fournit une connexion hydraulique séparable entre ladite bouche de sortie (160, 165) du corps (150) et la bouche d'entrée (195) de la buse de distribution respective (140, 145),
dans lequel les bouches de sortie (160, 165) ont des axes (X', X") coplanaires et mutuellement divergents dans la direction de distribution,
**caractérisé en ce que** chaque dispositif d'engagement comprend un connecteur hydraulique à accouplement rapide et à libération rapide ayant une première partie (210), qui est associée à la bouche de sortie (160, 165) du corps (150), et une deuxième partie (205), qui est associée à la bouche d'entrée (195) de la buse de distribution (140, 145) et adaptée pour être fixée à la première partie (210),
dans lequel l'angle d'inclinaison mutuel (α) des axes (X', X") des bouches de sortie (160, 165) est compris entre 5° et 15°.

2. Tête (130) selon la revendication 1, dans laquelle un dispositif d'engagement est associé à la bouche d'entrée (155), qui est adapté pour fournir une connexion hydraulique séparable entre ladite bouche d'entrée (155) et la bouche de sortie (125) du pistolet de distribution (105).

3. Tête selon la revendication 2, dans laquelle ledit dispositif d'engagement comprend une première partie (175) d'un connecteur hydraulique à accouplement rapide et à libération rapide, laquelle partie est adaptée pour être fixée à une deuxième partie (180) dudit connecteur hydraulique associée à la sortie de bouche (125) du pistolet de distribution (105).

4. Tête (130) selon la revendication 3, dans laquelle ladite première partie (175) du connecteur hydraulique est une partie mâle.

5. Tête (130) selon l'une quelconque des revendications 2 à 4, dans laquelle ledit dispositif d'engagement est adapté pour connecter la bouche d'entrée (155) à la bouche de sortie (125) du pistolet de distribution (105) dans au moins deux positions angulaires différentes.

6. Tête (130) selon l'une quelconque des revendications précédentes, dans laquelle ladite première partie (210) du connecteur hydraulique est une partie femelle ayant une cavité et ladite deuxième partie (205) du connecteur hydraulique est une partie mâle adaptée pour être insérée et verrouillée dans la cavité de la première partie (210),
la bouche de sortie (160, 165) du corps (150) étant définie sur le fond de la cavité de la première partie (210),
la bouche d'entrée (195) de la buse de distribution correspondante (140, 145) étant définie à l'extrémité de la deuxième partie (205),
chaque connecteur hydraulique étant pourvu d'un système d'encliquetage automatique prévu pour verrouiller la deuxième partie (205) par rapport à la première partie (210), lorsque la deuxième partie (205) atteint une position de verrouillage axial prédéfinie à l'intérieur de la cavité de la première partie (210).

7. Tête (130) selon la revendication 6, dans laquelle le système d'encliquetage automatique comprend un cliquet mobile (216) associé à la première partie (210) de façon à se déplacer dans une direction transversale par rapport à la direction d'insertion de la deuxième partie (205), un ressort adapté pour pousser ledit cliquet (216) vers une position extraite, dans laquelle il fait au moins partiellement saillie à l'intérieur de la cavité de la première partie (210), et un bouton déclencheur (217) placé sur le côté extérieur de la deuxième partie (210) et adapté pour être pressé manuellement pour déplacer le cliquet (216), afin de contrer l'action du ressort, vers une position rétractée dans laquelle il ne fait pas saillie à l'intérieur de la cavité de la première partie (210),
la deuxième partie (205) du connecteur hydraulique comprenant un tronçon d'extrémité conique dont la surface extérieure est adaptée pour servir de profil de came afin de transformer le mouvement d'insertion axial de la deuxième partie (205) dans la première partie (210), en un mouvement transversal du cliquet (216) vers la position rétractée, et une cavité annulaire (218) adaptée pour faire face et être alignée transversalement avec le cliquet (216) lorsque la deuxième partie (205) atteint une position de verrouillage.

8. Tête (130) selon l'une quelconque des revendications précédentes, dans laquelle chacune desdites buses de distribution (140, 145) est une buse de distribution choisie dans le groupe constitué par : une buse à jet fixe conique, une buse à jet réglable conique, une buse fixe à jet en éventail, une buse réglable à jet en éventail, une buse à jet rotatif.

9. Tête (130) selon l'une quelconque des revendications précédentes, dans laquelle l'une (140) des buses de distribution est une buse à jet rotatif et l'autre (145) des buses de distribution est une buse fixe à jet en éventail.

10. Tête (130) selon l'une quelconque des revendications précédentes, comprenant une articulation adaptée pour faire varier l'inclinaison d'un axe (X) de la bouche d'entrée (155) par rapport aux axes (X', X") des bouches de sortie (160, 165).

11. Ensemble de distribution (100) pour nettoyeurs haute pression, comprenant un pistolet de distribution (105) et une tête selon l'une quelconque des revendications précédentes.
